# EUROPÄISCHE PATENTSCHRIFT

(11) **EP 0 731 813 B1**
(45) Veröffentlichungstag und Bekanntmachung des Hinweises auf die Patenterteilung: **15.10.1997**
(21) Anmeldenummer: 95901415.0
(22) Anmeldetag: 23.11.1994
(51) Int. Cl.: C08F 26/06, C11D 3/00, C11D 3/37

(54) **POLYMERISATE VON ALKYL-1-VINYLIMIDAZOLEN**
POLYMERS OF ALKYL-1-VINYLIMIDAZOLES
POLYMERISATS D'ALKYLE-1-VINYLGLYOXALINES

(30) Priorität: 02.12.1993 DE 4341072
(43) Veröffentlichungstag der Anmeldung: 18.09.1996
(73) Patentinhaber: BASF AKTIENGESELLSCHAFT, 67056 Ludwigshafen (DE)
(72) Erfinder: SCHADE, Christian, D-67061 Ludwigshafen (DE); JÄGER, Hans-Ulrich, D-67434 Neustadt (DE); DETERING, Jürgen, D-67117 Limburgerhof (DE)
(86) Internationale Anmeldenummer: EP9403868
(87) Internationale Veröffentlichungsnummer: WO9515345

(56) Entgegenhaltungen:
- EP-A- 0 438 713
- JOURNAL OF INORGANIC BIOCHEMISTRY, Bd.17, Nr.4, 1982, NEW-YORK, USA Seiten 283 - 291 E.TSUCHIDA ET AL. 'coordination property of poly(1-vinyl-2-methylimidazole)-heme complexes' in der Anmeldung erwähnt
- JOURNAL OF INORGANIC BIOCHEMISTRY, Bd.17, Nr.4, 1982, NEW-YORK, USA Seiten 283 - 291 E.TSUCHIDA ET AL. 'coordination property of poly(1-vinyl-2-methylimidazole)-heme complexes'

## Beschreibung

Die Erfindung betrifft Polymerisate von Alkyl-1-vinylimidazolen, Verfahren zur Herstellung von Polymerisaten von Alkyl-1-vinylimidazolen durch radikalische Polymerisation von Monomermischung aus
(a) 10 bis 100 Gew.-% mindestens eines Alkyl-1-vinylimidazols und
(b) 0 bis 90 Gew.-% 1-Vinylpyrrolidon, 1-Vinylcaprolactam, 1-Vinyltriazol, 1-Vinylimidazol, 1-Vinyloxazolidinon oder deren Mischungen,
(c) 0 bis 30 Gew.-% anderen monoethylenisch ungesättigten Monomeren und
(d) 0 bis 10 Gew.-% eines mindestens 2 monoethylenisch ungesättigte Doppelbindungen enthaltenden Monomeren
in Wasser, mindestens einem C₁- bis C₄-Alkohol oder deren Mischungen und die Verwendung von Polymerisaten, die mindestens 10 Gew.-% Alkyl-1-vinylimidazole einpolymerisiert enthalten, als Zusatz zu Waschmitteln zur Inhibierung der Farbstoffübertragung während des Waschvorgangs.

Aus der DE-B-22 32 353 sind Wasch- und Reinigungsmittelmischungen bekannt, die im wesentlichen aus 95 bis 60 Gew.-% nichtionischen Detergentien und 5 bis 40 Gew.-% eines teilweise oder vollständig wasserlöslichen Polyvinylpyrrolidons bestehen und im wesentlichen von anionischen oberflächenaktiven Mitteln frei sind. Die Polymerisate des Vinylpyrrolidons verhindern beim Waschvorgang den Farbstoffübergang von gefärbten auf weiße Textilien. Die Polymerisate des Vinylpyrrolidons haben Molekulargewichte in dem Bereich von etwa 10 000 bis etwa 1 000 000. Es kommen sowohl Homopolymerisate als auch Copolymerisate des Vinylpyrrolidons in Betracht. Als geeignete Comonomere werden Acrylnitril oder Maleinsäureanhydrid genannt. Die Wirksamkeit der Vinylpyrrolidonpolymerisate als Farbstoffübertragungsinhibitor wird jedoch von anionischen Tensiden stark beeinträchtigt. Gegenüber einer Anzahl von Ausfärbungen besitzen diese Polymeren nur eine unzureichende Wirksamkeit.

Aus der DE-A-28 14 287 sind Wasch- und Reinigungsmittel bekannt, die anionische und/oder nichtionische Tenside, Gerüstsubstanzen und sonstige übliche Waschmittelzusätze sowie als verfärbungsinhibierende Additive 0,1 bis 10 Gew.-% an wasserlöslichen bzw. wasserdispergierbaren Homo- bzw. Copolymerisaten des N-Vinylimidazols enthalten. Die Polymeren haben in 1 gew.-%iger wäßriger Lösung bei 20°C eine spezifische Viskosität von 0,01 bis 5. Ein gravierender Nachteil dieser Polymeren ist die Tatsache, daß sie in Waschmittelformulierungen zur Ausbildung sehr unangenehmer Gerüche neigen. Hierauf wird auch in der EP-A-0 327 927 hingewiesen. Die Polymerisate lassen sich außerdem nicht immer problemlos in Flüssigwaschmittel einarbeiten, weil die entstehenden Mischungen instabil oder trüb sind.

Aus J. Inorg. Biochem. Band 17, 283 - 291 (1982) ist die Synthese von Poly-2-methyl-1-vinylimidazol und von Copolymerisaten aus 2-Methyl-1-vinylimidazol und 1-Vinylpyrrolidon in Methanol bekannt.

Der Erfindung liegt die Aufgabe zugrunde, neue Stoffe und ein Verfahren zur Herstellung von Polymerisaten von Alkyl-1-vinylimidazolen zur Verfügung zu stellen, das technisch einfach durchführbar ist. Eine weitere Aufgabe der Erfindung liegt darin, für die Verwendung in Waschmitteln geeignete Stoffe aufzuzeigen, die eine Farbübertragung während des Waschvorgangs verhindern.

Die Aufgabe wird erfindungsgemäß gelöst mit Polymerisaten von Alkyl-1-vinylimidazolen, die erhältlich sind durch radikalische Polymerisation von Monomermischungen aus
(a) 10 bis 100 Gew.-% mindestens eines Alkyl-1-vinylimidazols,
(b) 0 bis 90 Gew.-% 1-Vinylpyrrolidon, 1-Vinylcaprolactam, 1-Vinyltriazol, 1-Vinylimidazol, 1-Vinyloxazolidinon oder deren Mischungen,
(c) 0 bis 30 Gew.-% anderen monoethylenisch ungesättigten Monomeren und
(d) 0 bis 10 Gew.% eines mindestens 2 monoethylenisch ungesättigte Doppelbindungen enthaltenden Monomeren
in Wasser, mindestens einem C₁- bis C₄-Alkohol oder deren Mischungen in Gegenwart von Polymerisationsreglern.

Die Aufgabe wird außerdem erfindungsgemäß gelöst mit einem Verfahren zur Herstellung von Polymerisaten von Alkyl-1-vinylimidazolen durch radikalische Polymerisation von Monomermischungen aus
(a) 10 bis 100 Gew.-% mindestens eines Alkyl-1-vinylimidazols und
(b) 0 bis 90 Gew.-% 1-Vinylpyrrolidon, 1-Vinylcaprolactam, 1-Vinyltriazol, 1-Vinylimidazol, 1-Vinyloxazolidinon oder deren Mischungen,
(c) 0 bis 30 Gew.-% anderen monoethylenisch ungesättigten Monomeren und
(d) 0 bis 10 Gew.-% eines mindestens 2 monoethylenisch ungesättigte Doppelbindungen enthaltenden Monomeren
in Wasser, mindestens einem C₁- bis C₄-Alkohol oder deren Mischungen, wenn man die Polymerisation in Gegenwart von Polymerisationsreglern durchführt.

Die zuletzt genannte Aufgabe der Erfindung wird gelöst mit der Verwendung von Polymerisaten, die mindestens 10 Gew.-% eines Alkyl-1-vinylimidazols einpolymerisiert enthalten, als Zusatz zu Waschmitteln zur Inhibierung der Farbstoffübertragung während des Waschvorgangs.

Als Monomere der Gruppe (a) kommen alle mit mindestens einer Alkylgruppe substituierten 1-Vinylimidazole in Betracht. Sie können beispielsweise mit Hilfe der folgenden Formel charakterisiert werden: 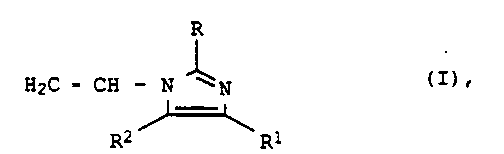 mit R,R¹, R² = H, C₁- bis C₄-Alkyl, wobei mindestens ein Substituent R, R¹ oder R² eine C₁- bis C₄-Alkylgruppe bedeutet. Die Substituenten R¹ und R² stehen bevorzugt für H, CH₃ und C₂H₅.

Monomere der Gruppe (a) sind beispielsweise 2-Methyl-1-vinylimidazol, 2-Ethyl-1-vinylimidazol, 2-Propyl-1-vinylimidazol, 2-Butyl-1-vinylimidazol, 2,4-Dimethyl-1-vinylimidazol, 2,5-Dimethyl-1-vinylimidazol, 2-Ethyl-4-methyl-1-vinylimidazol, 2-Ethyl-5-methyl-1-vinylimidazol, 2,4,5-Trimethyl-1-vinylimidazol, 4,5-Diethyl-2-methyl-1-vinylimidazol, 4-Methyl-1-vinylimidazol, 4-Ethyl-1-vinylimidazol, 4,5-Dimethyl-1-vinylimidazol, 5-Methyl-1-vinylimidazol oder 2,4,5-Triethyl-1-vinylimidazol. Man kann auch Mischungen der genannten Monomere in beliebigen Verhältnissen einsetzen. Vorzugsweise setzt man 2-Methyl-1-vinylimidazol, 2-Ethyl-1-vinylimidazol, 2-Ethyl-4-methyl-1-vinylimidazol oder 4-Methyl-1-vinylimidazol als Monomer der Gruppe (a) ein. Ganz besonders bevorzugt wird 2-Methyl-1-vinylimidazol. Die Polymerisate enthalten die Monomeren der Gruppe (a) in Mengen von 10 bis 100 Gew.-% einpolymerisiert.

Monomere der Gruppe (b) sind 1-Vinylpyrrolidon, 1-Vinylcaprolactam, 1-Vinyltriazol, 1-Vinylimidazol und 1-Vinyloxazolidinon sowie Mischungen der genannten Verbindungen untereinander. Von den Monomeren der Gruppe (b) werden 1-Vinylpyrrolidon und/oder 1-Vinylimidazol bevorzugt eingesetzt. Die Monomeren der Gruppe (b) sind, falls sie bei der Polymerisation zur Anwendung gelangen, in Mengen bis zu 90 Gew.-% in der Monomermischung enthalten.

Monomere der Gruppe c) sind monoethylenisch ungesättigte Verbindungen wie Acrylamide, Vinylester, Vinylether, (Meth-)Acrylester, (Meth-)Acrylsäure, Maleinsäure, Maleinsäureester, Styrol oder 1-Alkene. Vorzugsweise eingesetzt werden Monomere, die von den Monomeren (a) und (b) verschieden sind und die ein basisches Stickstoffatom enthalten. Diese Monomeren werden entweder in Form der freien Basen oder in neutralisierter oder quaternisierter Form eingesetzt. Weitere bevorzugte Monomere sind Monomere, die ein basisches Stickstoffatom und eine Amidgruppe im Molekül enthalten. Beispiele für die genannten bevorzugt in Betracht kommenden Monomeren sind N,N'-Dialkylaminoalkyl(meth)acrylate, z.B. Dimethylaminoethylacrylat, Dimethylaminoethyl(meth)acrylat, Diethylaminoethylacrylat, Diethylaminoethylmethacrylat, Dimethylaminopropylacrylat, Dimethylaminopropylmethacrylat, Diethylaminopropylacrylat- und Diethylaminopropylmethacrylat. Basische Monomeren, die zusätzlich eine Amidgruppierung im Molekül enthalten, sind N,N'-Dialkylaminoalkyl(meth)acrylamide, beispielsweise N,N'-Di-C₁- bis C₃-Alkylamino-C₂- bis C₆-Alkyl(meth)acrylamide, wie beispielsweise Dimethylaminoethylacrylamid, Dimethylaminoethylmethacrylamid, Diethylaminoethylacrylamid, Diethylaminoethylmethacrylamid, Dimethylaminopropylacrylamid und Dimethylaminopropylmethacrylamid. Weitere Monomere, die ein basisches Stickstoffatom haben, sind 4-Vinylpyridin, 2-Vinylpyridin, Diallyldi-C₁- bis C₁₂-Alkylamine und Diallyl-C₁- bis C₁₂-Alkylamine. Die basischen Monomeren werden bei der Copolymerisation in Form der freien Basen, der Salze mit organischen oder anorganischen Säuren oder in quaternierter Form eingesetzt. Für die Quaternierung eignen sich beispielsweise Alkylhalogenide mit 1 bis 18 C-Atomen in der Alkylgruppe, beispielsweise Methylchlorid, Ethylchlorid oder Benzylchlorid. Die Quaternierung der stickstoffhaltigen basischen Monomeren kann auch durch Umsetzung mit Dialkylsulfaten, insbesondere mit Diethylsulfat oder Dimethylsulfat, vorgenommen werden. Beispiele für quaternierte Monomere sind Trimethylammoniumethylmethacrylatchlorid, Dimethylethylammoniumethylmethacrylatethylsulfat und Dimethylethylammoniumethylmethacrylamidethylsulfat. Außerdem eignen sich 1-Vinylimidazolium-Verbindungen, die beispielsweise mit C₁- bis C₁₈-Alkylhalogeniden oder Benzylchlorid quaterniert oder mit einer Säure in die Salzform überführt sind. Solche Monomere können beispielsweise mit Hilfe der allgemeinen Formel 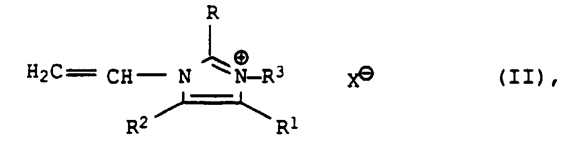 in der
- R,R¹,R² =: H, C₁- bis C₄-Alkyl,
- R³ =: H, C₁ bis C₁₈-Alkyl oder Benzyl und
- X^{⊖}: ein Anion ist,
charakterisiert werden. In Formel II kann das Anion ein Halogenion oder auch der Rest einer anorganischen oder organischen Säure sein. Beispiele für quaternierte 1-Vinylimidazole der Formel II sind 3-Methyl-1-vinylimidazoliumchlorid, 3-Benzyl-1-vinylimidazoliumchlorid oder 3-Ethyl-1-vinylimidazoliumsulfat. Selbstverständlich können auch die Polymerisate, die Monomere (a) und gegebenenfalls 1-Vinylimidazol oder basische Monomere (c) enthalten, durch Umsetzung mit üblichen Quaternisierungsmitteln wie Dimethylsulfat oder Methylchlorid teilweise quaternisiert werden. Sofern die Monomeren (c) eingesetzt werden, sind sie bis zu 30 Gew.-% in der Monomermischung enthalten.

Die Polymerisation der Monomeren (a) und gegebenenfalls (b) und/oder (c) kann gegebenenfalls auch in Gegenwart von Monomeren der Gruppe (d) vorgenommen werden. Hierbei handelt es sich um solche Monomeren, die mindestens 2 monoethylenisch ungesättigte Doppelbindungen im Molekül enthalten. Verbindungen dieser Art werden üblicherweise bei Polymerisationsreaktionen als Vernetzer eingesetzt.

Geeignete Vernetzer dieser Art sind beispielsweise Diacrylate oder Dimethylacrylate von mindestens zweiwertigen gesättigten Alkoholen, z.B. Ethylenglykoldiacrylat, Ethylenglykoldimethylacrylat, 1,2-Propylenglykoldiacrylat, 1,2-Propylenglykoldimethacrylat, Butandiol-1,4-diacrylat, Butandiol-1,4-dimethacrylat, Hexandioldiacrylat, Hexandioldimethacrylat, Neopentylglykoldiacrylat, Neopentylglykoldimethacrylat, 3-Methylpentandioldiacrylat und 3-Methylpentandioldimethacrylat. Auch die Acrylsäure- und Methacrylsäureester von Alkoholen mit mehr als 2 OH-Gruppen können als Vernetzer eingesetzt werden, z.B. Trimethylolpropantriacrylat oder Trimethylolpropantrimethacrylat. Eine weitere Klasse von Vernetzern sind Diacrylate oder Dimethacrylate von Polyethylenglykolen oder Polypropylenglykolen mit Molekulargewichten von jeweils 200 bis 9000. Polyethylenglykole bzw. Polypropylenglykole, die für die Herstellung der Diacrylate oder Dimethacrylate verwendet werden, haben vorzugsweise ein Molekulargewicht von jeweils 400 bis 2000. Außer den Homopolymerisaten des Ethylenoxids bzw. Propylenoxids können auch Blockcopolymerisate auf Ethylenoxid und Propylenoxid oder Copolymerisate aus Ethylenoxid und Propylenoxid eingesetzt werden, die die Ethylenoxid- und Propylenoxid-Einheiten statistisch verteilt enthalten. Auch die Oligomeren des Ethylenoxids bzw. Propylenoxids sind für die Herstellung der Vernetzer geeignet, z.B. Diethylenglykoldiacrylat, Diethylenglykoldimethacrylat, Triethylenglykoldiacrylat, Triethylenglykoldimethacrylat, Tetraethylenglykoldiacrylat und/oder Tetraethylenglykoldimethacrylat. Als Vernetzer eignen sich außerdem Vinylester von ethylenisch ungesättigten C₃- bis C₆-Carbonsäuren, z.B. Vinylacrylat, Vinylmethacrylat oder Vinylitaconat. Als Vernetzer geeignet sind außerdem Vinylester von mindestens 2 Carboxylgruppen enthaltenden gesättigten Carbonsäuren sowie Di- und Polyvinylether von mindestens zweiwertigen Alkoholen, z.B. Adipinsäuredivinylester, Butandioldivinylether und Trimethylolpropantrivinylether. Weitere Vernetzer sind Allylester ethylenisch ungesättigter Carbonsäuren, z.B. Allylacrylat und Allylmethacrylat, Allylether von mehrwertigen Alkoholen, z.B. Pentaerithrittriallylether, Triallylsaccharose und Pentallylsaccharose. Außerdem eignen sich als Vernetzer Methylenbismethacrylamid, Divinylethylenharnstoff, Divinylpropylenharnstoff, Divinylbenzol, Divinlyldioxan, Tetraallylsilan und Tetravinylsilan.

Die Monomeren der Gruppe (d) werden gegebenenfalls bei der Copolymerisation eingesetzt. Sie können in den Monomermischungen in Mengen bis zu 10 Gew.-% enthalten sein. Falls man die Monomeren der Gruppe (d) mit den Monomeren der Gruppe (a) und gegebenenfalls den Gruppen (b) und/oder (c) copolymerisiert, betragen die vorzugsweise angewendeten Mengen 0,05 bis 8 Gew.-%, bezogen auf die Monomermischungen.

Die Monomeren werden in Wasser, in mindestens einem C₁- bis C₄-Alkohol, in Mischungen der genannten Alkohole oder in Mischungen aus Wasser und mindestens einem Alkohol umgesetzt. Vorzugsweise verwendet man Wasser oder Mischungen aus Wasser und mindestens einem C₁- bis C₄-Alkohol in beliebigem Verhältnis als Lösemittel. Als Alkohole eignen sich Methanol, Ethanol, n-Propanol, Isopropanol, n-Butanol, tert.Butanol und Isobutanol. Von den Alkoholen werden vorzugsweise Ethanol oder Isopropanol eingesetzt. Bei der Polymerisation können auch anorganische Salze, beispielsweise Alkalihalogenide oder Alkalisulfate, in Mengen bis zu 20 Gew.-%, bezogen auf die eingesetzten Lösungsmittel, zugegen sein. Die Monomeren (a) und gegebenenfalls (b) und/oder (c) und gegebenenfalls (d) werden üblicherweise in einer Inertgasatmosphäre unter Einwirkung von Radikale bildenden Polymerisationsinitiatoren polymerisiert. Bei der Polymerisation der Monomeren der Gruppe (a) und gegebenenfalls der Gruppe (b) und/oder (c) entstehen niedrigmolekulare Polymerisate, die in Wasser oder Alkohol oder deren Gemischen löslich sind. Falls Monomere der Gruppe (d) mitverwendet werden, entstehen je nach Menge des eingesetzten Vernetzers Copolymerisate, die in den genannten Lösemitteln praktisch nicht lösliche sind bzw. in Wasser quellen. Die Konzentration der Polymeren in der entstehenden Polymerlösung beträgt üblicherweise beispielsweise 5 bis 60, vorzugsweise 20 bis 45 Gew.-%.

Die Monomeren werden radikalisch polymerisiert, d.h. zur Initiierung der Homo- oder Copolymerisation benötigt man Verbindungen, die unter den Polymerisationsbedingungen Radikale bilden. Solche Radikale bildenden Initiatoren sind alle üblichen Peroxi- und Azoverbindungen, beispielsweise Peroxide, Hydroperoxide und Peroxiester, wie Wasserstoffperoxid, Dibenzoylperoxid, Di-tert.-butylperoxid, tert.-Butylhydroperoxid, tert.-Butylperoxipivalat und tert.-Butylperoxi-2-ethylhexanoat sowie Azoverbindungen wie 2,2'-Azobis(2-amidinopropan) dihydrochlorid, 2,2'-Azobis [2-(2-imidazolin-2-yl)propan]dihydrochlorid, 4,4'-Azobis(4-cyanovaleriansäure), 2,2'-Azobis(2,4-dimethylvaleronitril), 2,2'-Azobisisobutyronitril, 2,2'-Azobis(2-methylbutyronitril) und Dimethyl-2,2'-azobis(2-methylpropionat). Man kann selbstverständlich auch Initiatormischungen oder die bekannten Redoxinitiatoren verwenden. Beispiele für Redoxinitiatoren sind Kombinationen aus mindestens einer Peroxoverbindung wie Kalium-, Natrium- oder Ammoniumpersulfat, Natriumhypochlorit, Natriumperborat, Natriumpercarbonat, Wasserstoffperoxid, tert.-Butylhydroperoxid oder Di-tert.-butylperoxid und mindestens einem Reduktionsmittel wie Ascorbinsäure, Milchsäure, Zitronensäure, Natriumsulfit, Natriumhydrogensulfit, Acetondisulfit, Natriumdithionit, Natrium-N-hydroxymethylsulfinat oder einem tertiären Amin wie Dimethylphenylamin. Die Initiatoren werden in üblichen Mengen eingesetzt, z.B. in Mengen von 0,1 bis 6 Gew.-%, bezogen auf die zu polymerisierenden Monomeren.

Die Polymerisation kann in einem weiten Temperaturbereich erfolgen, z.B. bei 50 - 150°C. Vorzugsweise arbeitet man in dem Temperaturbereich von 50 - 100°C. Falls die Polymerisation bei Temperaturen oberhalb des Siedepunktes des Lösemittels bzw. der Lösmittelmischung liegt, arbeitet man in druckdicht verschlossenen Apparaturen unter erhöhten Drücken. Die Polymerisation wird erfindungsgemäß in Gegenwart von Polymerisationsreglern durchgeführt. Geeignete Polymerisationsregler sind beispielsweise Halogenverbindungen wie Tetrachlormethan, Chloroform und Bromtrichlormethan, Allylverbindungen wie Allylalkohol oder 2,5-Diphenyl-1-hexen, Hydroxylamin und Alkylhydroxylamine wie Diethylhydroxylamin, Salze des Hydroxylamins sowie Salze von Alkylhydroxylaminen, Hypophosphite, Ameisensäure, Ammoniumformiat, Aldehyde, Hydrazin oder Salze des Hydrazins wie Hydrazinsulfat.

Bevorzugt werden Polymerisationsregler eingesetzt, die Schwefel in gebundener Form enthalten. Verbindungen dieser Art sind beispielsweise anorganische Hydrogensulfite, Sulfite, wie Natriumsulfit, Disulfite und Dithionite oder organische Sulfide, Disulfide, Polysulfide, Sulfoxide, Sulfone und Mercaptoverbindungen. Folgende Polymerisationsregler werden beispielhaft genannt:

Di-n-butylsulfid, Di-n-octylsulfid, Diphenylsulfid, Thiodiglykol, Ethylthioethanol, Diisopropyldisulfid, Di-n-butyldisulfid, Di-n-hexyldisulfid, Diacetyldisulfid, Diethanolsulfid, Di-t-butyltrisulfid und Dimethylsulfoxid. Bevorzugt als Polymerisationsregler eingesetzte Verbindungen sind Mercaptoverbindungen, Dialkylsulfide, Dialkyldisulfide und/oder Diarylsulfide. Beispiele für diese Verbindungen sind Ethylthioglykolat, Diisopropylxanthogendisulfid, Cystein, 2-Mercaptoethanol, 1,3-Mercaptopropanol, 3-Mercaptopropan-1,2-diol, 1,4-Mercaptobutanol, Mercaptoessigsäure, 3-Mercaptopropionsäure, Mercaptobernsteinsäure, Thioglycerin, Thioessigsäure, Thioharnstoff und Alkylmercaptane wie n-Butylmercaptan, n-Hexylmercaptan, n-Dodecylmercaptan oder tert.-Dodecylmercaptan. Besonders bevorzugt eingesetzte Polymerisationsregler sind Mercaptoalkohole und Mercaptocarbonsäuren. Die Polymerisationsregler, die Schwefel in gebundener Form enthalten, werden in Mengen von 0,1 bis 15, vorzugsweise 0,5 bis 10 Gew.-%, bezogen auf die bei der Polymerisation eingesetzten Monomeren, verwendet. Bei der Polymerisation können selbstverständlich auch Mischungen der erfindungsgemäß einzusetzenden Polymerisationsregler angewendet werden.

Die Monomeren können nach den üblichen Verfahrenstechniken polymerisiert werden, z. B. nach der sogenannten Batch-Polymerisation, bei der man entweder Alkyl-1-vinylimidazole oder Mischungen aus Alkyl-1-vinylimidazolen und gegebenenfalls den Monomeren (b) bis (d), Regler und Initiator in einem Lösemittel vorlegt und auf die Polymerisationstemperatur erwärmt. Das Reaktionsgemisch wird solange bei der Polymerisationstemperatur gerührt, bis die Umsetzung vorzugsweise mehr als 99,5 % beträgt. Die Zugabe des Initiators kann bei diesem Verfahren gegebenenfalls auch erst nach Erreichen der Polymerisationstemperatur erfolgen.

Weitere Verfahrensvarianten zur Polymerisation stellen die üblichen Zulaufmethoden dar, die bevorzugt angewandt werden. Bei diesen Verfahrensvarianten wird beispielsweise zu einem Gemisch aus den Monomeren (a) und gegebenenfalls mindestens einem Monomer (b) bis (d) und einem Lösemittel bei der Polymerisationstemperatur innerhalb einer bestimmten Zeit eine Lösung des Polymerisationsreglers und eine Initiatorlösung kontinuierlich oder portionsweise zugegeben. Es ist jedoch auch möglich, eine Mischung aus Regler und Initiator der auf Polymerisationstemperatur erwärmten Vorlage zuzudosieren. Eine andere Methode besteht darin, den Initiator unterhalb oder bei der Polymerisationstemperatur in die Vorlage zu geben und nur den Regler oder eine Lösung des Reglers nach Erreichen der Polymerisationstemperatur innerhalb eines vorgegebenen Zeitraums dem Reaktionsgemisch zuzuführen. Eine weitere Variante der Zulauftechnik besteht darin, daß man die Vorlage auf eine Temperatur erwärmt, bei der die Polymerisation abläuft und dann Regler, Initiator und Monomere in getrennten Zuläufen oder gemeinsam zugibt. Bei dieser Technik dient vorzugsweise Wasser oder ein Gemisch aus Wasser, Monomer und/oder Initiator und/oder Regler als Vorlage. Erfindungsgemäß ist eine Verfahrensweise bevorzugt, bei der die Polymerisationsregler während der Polymerisation der Monomeren kontinuierlich oder portionsweise zugegeben werden. Bei der Polymerisation der Monomeren (a) gegebenenfalls mit den Monomeren (b) und/oder (c) entstehen nach dem erfindungsgemäßen Verfahren niedrigmolekulare Polymerisate, die K-Werte von 10 - 60 haben (bestimmt nach H. Fikentscher in 0,1%iger wäßriger Lösung bei 25°C und einer Polymerkonzentration von 1 Gew.-%). Falls die Polymerisation der Monomeren (a) und gegebenenfalls mit mindestens einem Monomer (b) bis (c) mit den Monomeren (d) durchgeführt wird, entstehen wasserunlösliche Polymerisate, die in wäßrigem Medium lediglich quellen. Da sie sich nicht in Wasser lösen, können für diese Copolymerisate keine K-Werte bestimmt werden.

Die bei der Polymerisation entstehenden Lösungen können im Anschluß an den Polymerisationsprozeß einer physikalischen oder chemischen Nachbehandlung unterworfen werden. Darunter versteht man beispielsweise eine Nachbehandlung der Polymerlösung mittels Wasserdampfdestillation, das Strippen mit Dampf und/oder Stickstoff oder teilweises Abdestillieren des Lösemittels, wobei flüchtige Verbindungen oder Verunreinigungen aus der Lösung entfernt werden. Bei einer chemischen Nachbehandlung erfolgt der Zusatz von Polymerisationsinitiatoren oder Mischungen mehrerer Polymerisationsinitiatoren und Erhitzen der Polymerlösung ggf. auf Temperaturen, die oberhalb der Polymerisationstemperatur liegen. Dadurch wird beispielsweise der Restmonomergehalt der Polymeren erniedrigt.

In manchen Fällen kann es auch vorteilhaft sein, die Polymerisate nachträglich einer oxidativen Behandlung zu unterziehen. Zu diesem Zweck läßt man die Oxidationsmittel bevorzugt als eine wäßrige Lösung auf die Polymerisate einwirken. Geeignete Oxidationsmittel sind beispielsweise Wasserstoffperoxid, Alkylhydroperoxide, wie tert.-Butylhydroperoxid, Persäuren, Natriumhypochlorit, Natriumperborat, Natriumpercarbonat oder Natriumpersulfat. Besonders bevorzugt ist der Einsatz von Wasserstoffperoxid. Sofern eine oxidative Nachbehandlung vorgenommen wird, setzt man Wasserstoffperoxid oder die anderen in Betracht kommenden Oxidationsmittel in Mengen von 0,1 - 50 Gew.-%, bezogen auf die Polymerisate, ein. Die Behandlung mit den Oxidationsmitteln kann beispielsweise im Temperaturbereich von 50 - 120°C erfolgen, wobei man bei Temperaturen oberhalb 100°C üblicherweise in druckdicht verschlossenen Apparaturen arbeitet.

Nach dem erfindungsgemäßen Verfahren erhält man restmonomerarme Polymerlösungen bzw. bei Einsatz von Monomeren der Gruppe (d) restmonomerarme Polymersatsuspensionen. Die Polymerlösungen sowie die Suspensionen können direkt in den Handel gebracht werden. Man kann jedoch auch die Polymeren isolieren, z.B. durch Sprühtrocknung aus wäßriger Lösung oder Dispersion.

Polymerisate, die mindestens 10 Gew.-% eines Alkyl-1-vinylimidazols einpolymerisiert enthalten, werden als Zusatz zu Waschmitteln zur Inhibierung der Farbstoffübertragung während des Waschvorgangs verwendet. Sie bewirken beim gemeinsamen Waschen von gefärbten und weißen Textilien eine Inhibierung der Farbstoffübertragung auf die nichtgefärbten Textilien. Die Waschmittelformulierungen enthalten erfindungsgemäß die Polymerisate von Alkyl-1-vinylimidazolen in Mengen, die eine Farbstoffübertragung während des Waschvorgangs wirksam verhindern, z.B. 0,1 bis 10, vorzugsweise 0,2 bis 4 Gew.-% Polymer, bezogen auf die jeweilige Waschmittelformulierung. Besonders bevorzugt ist dabei der Einsatz von niedrigmolekularen Polymerisaten von Alkyl-1-vinylimidazolen, die durch Polymerisation der Monomeren in Gegenwart von Polymerisationsreglern, insbesondere von solchen Reglern erhältlich sind, die Schwefel in gebundener Form enthalten. Die niedrigmolekularen Polymerisate von Alkyl-1-vinylimidazolen, die durch Polymerisieren der Monomeren (a) und gegebenenfalls (b) und/oder (c) in Abwesenheit von Monomeren (d) herstellbar sind, haben K-Werte von 10 bis 60, vorzugsweise 12 bis 40 bestimmt nach H. Fikentscher in wäßriger Lösung bei 25°C und einer Polymerkonzentration von 1 Gew.-%).

Die Waschmittel können pulverförmig sein oder auch in flüssiger Einstellung vorliegen. Die Zusammensetzung der Wasch- und Reinigungsmittelformulierungen kann sehr unterschiedlich sein. Wasch- und Reinigungsmittelformulierungen enthalten üblicherweise 2 bis 50 Gew.-% Tenside und gegebenenfalls Builder. Diese Angaben gelten sowohl für flüssige als auch für pulverförmige Waschmittel. Wasch- und Reinigungsmittelformulierungen, die in Europa, in den USA und in Japan gebräuchlich sind, findet man beispielsweise in Chemical und Engn. News, Band 67, 35 (1989) tabellarisch dargestellt. Weitere Angaben über die Zusammensetzung von Wasch- und Reinigungsmitteln können der WO-A-90/13581 sowie Ullmanns Encyklopädie der technischen Chemie, Verlag Chemie, Weinheim 1983, 4. Auflage, Seiten 63-160, entnommen werden. Die Waschmittel können gegebenenfalls noch ein Bleichmittel enthalten, z.B. Natriumperborat, das im Fall seines Einsatzes in Mengen bis zu 30 Gew.-% in der Waschmittelformulierung enthalten sein kann. Die Wasch- und Reinigungsmittel können gegebenenfalls weitere übliche Zusätze enthalten, z.B. Komplexbildner, Trübungsmittel, optische Aufheller, Enzyme, Parfümöle, andere Farbübertragungsinhibitoren, Vergrauungsinhibitoren und/oder Bleichaktivatoren.

Die niedrigmolekularen Polymerisate von Alkyl-1-vinylimidazolen bzw. Copolymerisate aus den Monomeren (a) und gegebenenfalls (b) und/oder (c) eignen sich insbesondere zur Herstellung von Flüssigwaschmittelformulierungen, weil sie mit den Bestandteilen der Flüssigwaschmittelformulierung verträglich sind, so daß man klare, lagerstabile Mischungen erhält, aus denen sich die Polymerisate nicht abscheiden. Die quellbaren Polymerisate von Alkyl-1-vinylimidazolen, die gegebenenfalls mindestens 1 Monomer der Komponente (b) und/oder (c) und mindestens ein Monomer (d) einpolymerisiert enthalten, werden ebenfalls als Zusatz zu pulverförmigen und flüssigen Waschmitteln verwendet. Die vernetzten Polymerisate werden vorzugsweise in pulverförmigen Waschmittelformulierungen eingesetzt.

Der Restmonomergehalt an Alkyl-1-vinylimidazolen in dem nach dem erfindungsgemäßen Verfahren hergestellten Polymerisaten liegt üblicherweise bei höchstens 0,2 Gew.% und kann durch eine geeignete Nachbehandlung der Polymerisate reduziert werden.

Die in den Beispielen angegebenen K-Werte werden nach H. Fikentscher, Cellulose-Chemie, Band 13, 58 - 64 und 71 - 74 (1932) in wäßriger Lösung bei 25°C und einer Polymerkonzentration von 1 Gew.-% bestimmt. Die Prozentangaben in den Beispielen bedeuten Gewichtsprozent, die Teile sind Gewichtsteile. Der Restmonomergehalt der Polymerisate wurde gaschromatographisch bestimmt.

### Beispiel 1

In einem 100 ml fassenden Kolben, der mit einem Rührer und einer Vorrichtung für das Arbeiten unter Stickstoff ausgestattet war, wurden 150 g Wasser vorgelegt und unter Stickstoffatmosphäre auf 80°C erhitzt. Sobald diese Temperatur erreicht war, wurde ein Zulauf aus 100 g 2-Methyl-1-vinylimidazol und 0,5 g Mercaptoethanol während 2 Stunden und ein weiterer Zulauf aus 1 g 2,2'-Azo-bis(2-amidinopropan)dihydrochlorid in 50 g Wasser während 4 Stunden zugetropft. Nach Beendigung der Zugabe des Polymerisationsinitiators wurde das Reaktionsgemisch noch 2 Stunden bei 80°C gerührt. Man erhielt eine klare, viskose Flüssigkeit mit einem Feststoffgehalt von 34,8 % und einem K-Wert von 38,2.

### Beispiel 2

In einem 100 ml fassenden Kolben, der mit einem Rührer und einer Vorrichtung für das Arbeiten unter Stickstoff ausgestattet war, wurden 150 g Wasser und 1 g 2,2'-Azobis(2-amidinopropan)dihydrochlorid vorgelegt und unter Stickstoffatmosphäre auf 80°C erhitzt. Sobald diese Temperatur erreicht war, wurde ein Zulauf aus 100 g 2-Methyl-1-vinylimidazol und 2 g Mercaptoethanol während 2 Stunden und ein weiterer Zulauf aus 1 g 2,2'-Azobis(2-amidinopropan)dihydrochlorid in 50 g Wasser während 4 Stunden zugetropft. Nach Beendigung der Zugabe des Polymerisationsinitiators wurde das Reaktionsgemisch noch 2 Stunden bei 80°C gerührt. Man erhielt eine klare, viskose Flüssigkeit mit einem Feststoffgehalt von 35,1 % und einem K-Wert von 17,2.

### Beispiel 3

In einem 1000 ml fassenden Kolben, der mit einem Rührer und einer Vorrichtung für das Arbeiten unter Stickstoff ausgestattet war, wurden 150 g Wasser und 1 g 2,2'-Azobis(2-amidinopropan)dihydrochlorid vorgelegt und unter Stickstoffatmosphäre auf 80°C erhitzt. Sobald diese Temperatur erreicht war, wurde ein Zulauf aus 50 g 2-Methyl-1-vinylimidazol, 50 g 1-Vinylimidazol und 2 g Mercaptoethanol während 2 Stunden und ein weiterer Zulauf aus 1 g 2,2'-Azobis(2-amidinopropan)dihydrochlorid in 50 g Wasser während 4 Stunden zugetropft. Nach Beendigung der Zugabe des Polymerisationsinitiators wurde das Reaktionsgemisch noch 2 Stunden bei 80°C gerührt. Man erhielt eine klare, viskose Flüssigkeit mit einem Feststoffgehalt von 36,0 % und einem K-Wert von 27,3.

### Beispiel 4

In einem 1000 ml fassenden Kolben, der mit einem Rührer und einer Vorrichtung für das Arbeiten unter Stickstoff ausgestattet war, wurden 150 g Wasser und 1 g 2,2'-Azobis(2-amidinopropan)dihydrochlorid vorgelegt und unter Stickstoffatmosphäre auf 80°C erhitzt. Sobald diese Temperatur erreicht war, wurde ein Zulauf aus 50 g 2-Methyl-1-vinylimidazol, 50 g N-Vinylpyrrolidon und 3 g Mercaptoethanol während 2 Stunden und ein weiterer Zulauf aus 1 g 2,2'-Azobis(2-amidinopropan)dihydrochlorid in 50 g Wasser während 4 Stunden zugetropft. Nach Beendigung der Zugabe des Polymerisationsinitiators wurde das Reaktionsgemisch noch 2 Stunden bei 80°C gerührt. Man erhielt eine klare, viskose Flüssigkeit mit einem Feststoffgehalt von 36,8 % und einem K-Wert von 17,4.

### Beispiel 5

In einem 1000 ml fassenden Kolben, der mit einem Rührer und einer Vorrichtung für das Arbeiten unter Stickstoff ausgestattet war, wurden 150 g Wasser vorgelegt und unter Stickstoffatmosphäre auf 80°C erhitzt. Sobald diese Temperatur erreicht war, wurde ein Zulauf aus 25 g 2-Methyl-1-vinylimidazol, 75 g N-Vinylpyrrolidon und 1 g Mercaptoethanol während 2 Stunden und ein weiterer Zulauf aus 1 g 2,2'-Azobis(2-amidinopropan)dihydrochlorid in 50 g Wasser während 2 Stunden und ein weiterer Zulauf aus 1 g 2,2'-Azobis(2-amidinopropan)dihydrochlorid in 50 g Wasser während 4 Stunden zugetropft. Nach Beendigung der Zugabe des Polymerisationsinitiators wurde das Reaktionsgemisch noch 2 Stunden bei 80°C gerührt. Man erhielt eine klare, viskose Flüssigkeit mit einem Feststoffgehalt von 34,7 % und einem K-Wert von 26,2.

### Beispiel 6

In einem 1000 ml fassenden Kolben, der mit einem Rührer und einer Vorrichtung für das Arbeiten unter Stickstoff ausgestattet war, wurden 150 g Wasser vorgelegt und unter Stickstoffatmosphäre auf 80°C erhitzt. Sobald diese Temperatur erreicht war, wurde ein Zulauf aus 75 g 2-Methyl-1-vinylimidazol, 25 g N-Vinylpyrrolidon und 1 g Mercaptoethanol während 2 Stunden und ein weiterer Zulauf aus 1 g 2,2'-Azobis(2-amidinopropan)dihydrochlorid in 50 g Wasser während 4 Stunden zugetropft. Nach Beendigung der Zugabe des Polymerisationsinitiators wurde das Reaktionsgemisch noch 2 Stunden bei 80°C gerührt. Man erhielt eine klare, viskose Flüssigkeit mit einem Feststoffgehalt von 35,0 % und einem K-Wert von 23,6.

### Beispiel 7

In einem 1000 ml fassenden Kolben, der mit einem Rührer und einer Vorrichtung für das Arbeiten unter Stickstoff ausgestattet war, wurden 150 g Ethanol vorgelegt und unter Stickstoffatmosphäre auf 78°C erhitzt. Sobald diese Temperatur erreicht war, wurde ein Zulauf aus 100 g 2-Methyl-1-vinylimidazol und 0,5 Mercaptoethanol während 2 Stunden und ein weiterer Zulauf aus 1 g Dimethyl-2,2'-azobis-isobutyrat in 50 g Ethanol während 3 Stunden zugetropft. Nach Beendigung der Zugabe des Polymerisationsinitiators wurde das Reaktionsgemisch noch 2 Stunden bei 78°C gerührt und anschließend einer Wasserdampfdestillation unterworfen. Man erhielt eine klare, viskose Flüssigkeit mit einem Feststoffgehalt von 33,4 % und einem K-Wert von 25,0.

### Beispiel 8

In einem 1000 ml fassenden Kolben, der mit einem Rührer und einer Vorrichtung für das Arbeiten unter Stickstoff ausgestattet war, wurden 100 g Wasser vorgelegt und unter Stickstoffatmosphäre auf 50°C erhitzt. Sobald diese Temperatur erreicht war, wurde ein Zulauf aus 50 g 2-Methyl-1-vinylimidazol, 1 g Mercaptoethanol und 0,1 g Natriumbisulfit in 50 g Wasser während 2 Stunden und ein weiterer Zulauf aus 1 g tert.-Butylhydroperoxid in 50 g Wasser während 4 Stunden zugetropft. Nach Beendigung der Zugabe des Peroxids wurde das Reaktionsgemisch noch 2 Stunden bei 50°C gerührt. Man erhielt eine klare, viskose Flüssigkeit mit einem Feststoffgehalt von 20,7 % und einem K-Wert von 21,9.

### Beispiel 9

In einem 250 ml fassenden Kolben, der mit einem Rührer und einer Vorrichtung für das Arbeiten unter Stickstoff ausgestattet war, wurden 100 g Wasser und 30 g 4-Methyl-1-vinylimidazol vorgelegt und unter Stickstoffatmosphäre auf 80°C erhitzt. Sobald diese Temperatur erreicht war, wurde ein Zulauf aus 0,6 g 2,2'-Azo-bis(2-amidinopropan)dihydrochlorid und 0,15 g Mercaptoethanol in 50 g Wasser während 6 Stunden zugetropft. Nach Beendigung der Zugabe des Polymerisationsinitiators wurde das Reaktionsgemisch noch 2 Stunden bei 80°C gerührt. Man erhielt eine klare, viskose Flüssigkeit mit einem Feststoffgehalt von 19,5 % und einem K-Wert von 30,5.

### Beispiel 10

In einem 1000 ml fassenden Kolben, der mit einem Rührer und einer Vorrichtung für das Arbeiten unter Stickstoff ausgestattet war, wurden 100 g Wasser vorgelegt und unter Stickstoffatmosphäre auf 85°C erhitzt. Sobald diese Temperatur erreicht war, wurde ein Zulauf aus 10 g 2-Ethyl-1-vinylimidazol und 30 mg Mercaptoethanol während 2 Stunden und ein weiterer Zulauf aus 0,1 g 2,2'-Azo-bis(2-amidinopropan)dihydrochlorid in 30 g Wasser während 4 Stunden zugetropft. Nach Beendigung der Zugabe des Polymerisationsinitiators wurde das Reaktionsgemisch noch 2 Stunden bei 85°C gerührt. Man erhielt eine klare, viskose Flüssigkeit mit einem Feststoffgehalt von 7,1 % und einem K-Wert von 20,4.

### Beispiel 11

In einem 1000 ml fassenden Kolben, der mit einem Rührer und einer Vorrichtung für das Arbeiten unter Stickstoff ausgestattet war, wurden 100 g Wasser vorgelegt und unter Stickstoffatmosphäre auf 80°C erhitzt. Sobald diese Temperatur erreicht war, wurde ein Zulauf aus 30 g 2-Ethyl-4-methyl-1-vinylimidazol und 0,2 g Mercaptoethanol in 30 g Wasser während 2 Stunden und ein weiterer Zulauf aus 0,3 g 2,2'-Azobis(2-amidinopropan)dihydrochlorid in 50 g Wasser während 4 Stunden zugetropft. Nach Beendigung der Zugabe des Polymerisationsinitiators wurde das Reaktionsgemisch noch 2 Stunden bei 80°C gerührt. Man erhielt eine klare, viskose Flüssigkeit mit einem Feststoffgehalt von 14,3 % und einem K-Wert von 22,0.

### Anwendungstechnische Prüfungen

Der Einfluß eines erfindungsgemäß hergestellten Polymerisates auf die Stabilität von Flüssigwaschmitteln wurde anhand folgender Flüssigwaschmittelzusammensetzung geprüft:

| | |
|---|---|
| 30 Teile | Anlagerungsprodukt von 7 Mol Ethylenoxid aus 1 Mol C₁₃/C₁₅-Oxoalkohol |
| 8 Teile | Dodecylbenzolsulfonsäure |
| 15 Teile | Kokosfettsäure |
| 5 Teile | Monoethanolamin |
| 3 Teile | Polypropylenglykol einer Molmasse von 600 |
| 7 Teile | 1,2-Propylenglykol |
| 15 Teile | eines modifizierten Polycarboxylats (Umsetzungsprodukt aus Maleinsäureanhydrid-Isobuten-Copolymerisat mit 8fach ethoxiliertem C₁₂/C₁₄-Oxoalkohol gemäß EP-A-0 367 049) |
| 1 Teil | des als Farbstoffübertragungsinhibitors wirkenden Polymers |
| 16 Teile | Wasser. |

Als Farbstoffübertragungsinhibitoren wirkende Polymere gemäß Stand der Technik wurden folgende Produkte in der oben beschriebenen Flüssigwaschmittelformulierung getestet:
Inhibitor 1: Polyvinylpyrrolidon mit K-Wert 30
Inhibitor 2: Polyvinylpyrrolidon mit K-Wert 17
Inhibitor 3: Polyvinylimidazol mit K-Wert 30

Erfindungsgemäß wurde als Farbstoffübertragungsinhibitor das nach Beispiel 2 hergestellte Poly(2-methyl-1-vinyl-imidazol) verwendet.

Während bei Einsatz der Inhibitoren 1, 2 und 3 in der oben angegebenen Flüssigwaschmittelformulierung jeweils instabile Mischungen erhalten wurden, die sich sofort trennten, erhielt man bei Einsatz des nach Beispiel 2 hergestellten Polymerisats ein lagerstabiles Flüssigwaschmittel, das selbst nach 3monatiger Lagerung bei 40°C keine Phasentrennung erkennen ließ.

Die oben beschriebenen Versuche wurden mit einem handelsüblichen Colorwaschmittel wiederholt, das keinen Farbübertragungsinhibitor enthielt. Zu diesem Flüssigwaschmittel (Persil® Color flüssig) gab man jeweils 1 Gew.-% der oben beschriebenen Inhibitoren 1, 2 und 3 sowie je nach den Beispielen 2 und 4 hergestellten Polymerisate. Bereits nach eintägiger Lagerung waren diejenigen Flüssigwaschmittelformulierungen instabil, die die Inhibitoren 1, 2 oder 3 enthielten, während Flüssigwaschmittelformulierungen, die 1 Gew.-% des nach Beispiel 2 oder Beispiel 4 hergestellten Polymerisats enthielten, selbst nach einer Lagerungszeit von 3 Monaten bei 40°C noch stabil waren und keinerlei Trennung zeigten.

Die Wirksamkeit von erfindungsgemäß hergestellten Polymerisaten bezüglich der Farbstoffübertragungsinhibierung wurden durch Waschversuche ermittelt, bei denen der Farbstoff der Flotte in gelöster Form zugegeben wurde. Als Farbstoff wurde Basilen® braun E-4-R (C.J. Reaktivbraun 32) und als Waschmittel Persil Color flüssig verwendet, dem jeweils 1 %, bezogen auf die Waschmittelmenge, eines der in der Tabelle 2 angegebenen Polymerisate zugesetzt wurde. Die Waschbedingungen sind in Tabelle 1 angegeben, während in Tabelle 2 die Ergebnisse der Farbstoffübertragungsinhibierung zusammengefaßt sind.

**Tabelle 1:**

| | |
|---|---|
| Gerät | Launder-o-meter |
| Zyklen | 1 |
| Temperatur | 60°C |
| Dauer | 30 min |
| Wasserhärte | 3 mmol Ca²⁺, Mg²⁺ (4:1)/l |
| Prüfgewebe | 10 g Baumwolle, 5 g Polyester/Baumwolle 5 g Polyester |
| Flottenverhältnis | 1:12,5 |
| Flottenmenge | 250 ml |
| Konzentration | 7 g/l |
| Farbstoffkonzentration | 0,001 % Basilen Braun E-4-R |

**Tabelle 2:**

| Farbstoffübertragungsinhibierung | | | |
|---|---|---|---|
| | Remission (%) | | |
| | Baumwolle | Polyester/Baumwolle | Polyester |
| Persil Color flüssig | 58,3 | 58,1 | 80,4 |
| Persil Color flüssig + 1 % Polymer nach Bsp. 2 | 77,6 | 77,0 | 80,4 |
| Persil Color flüssig + 1 % Polymer nach Bsp. 4 | 76,2 | 76,6 | 80,4 |

Wie aus Tabelle 2 ersichtlich ist, verhindert der Zusatz von 1 % eines der erfindungsgemäß zu verwendenden Polymere die Farbstoffübertragung sehr ausgeprägt an Baumwolle und Polyester/Baumwolle.

## Patentansprüche

1. Polymerisate von Alkyl-l-vinylimidazolen, dadurch gekennzeichnet, daß sie erhältlich sind durch radikalische Polymerisation von Monomermischungen aus
(a) 10 bis 100 Gew.-% mindestens eines Alkyl-1-vinylimidazols,
(b) 0 bis 90 Gew.-% 1-Vinylpyrrolidon, 1-Vinylcaprolactam, 1-Vinyltriazol, 1-Vinylimidazol, 1-Vinyloxazolidinon oder deren Mischungen,
(c) 0 bis 30 Gew.-% anderen monoethylenisch ungesättigten Monomeren und
(d) 0 bis 10 Gew.% eines mindestens 2 monoethylenisch ungesättigte Doppelbindungen enthaltenden Monomeren
in Wasser, mindestens einem C₁- bis C₄-Alkohol oder deren Mischungen in Gegenwart von Polymerisationsreglern.

2. Verfahren zur Herstellung von Polymerisaten von Alkyl-1-vinylimidazolen durch radikalische Polymerisation von Monomermischungen aus
(a) 10 bis 100 Gew.-% mindestens eines Alkyl-1-vinylimidazols,
(b) 0 bis 90 Gew.-% 1-Vinylpyrrolidon, 1-Vinylcaprolactam, 1-Vinyltriazol, 1-Vinylimidazol, 1-Vinyloxazolidinon oder deren Mischungen,
(c) 0 bis 30 Gew.-% anderen monoethylenisch ungesättigten Monomeren und
(d) 0 bis 10 Gew.% eines mindestens 2 monoethylenisch ungesättigte Doppelbindungen enthaltenden Monomeren
in Wasser, mindestens einem C₁- bis C₄-Alkohol oder deren Mischungen, dadurch gekennzeichnet, daß man die Polymerisation in Gegenwart von Polymerisationsreglern durchführt.

3. Verfahren nach Anspruch 2, dadurch gekennzeichnet, daß die Polymerisationsregler Schwefel in gebundener Form enthalten.

4. Verfahren nach Anspruch 2 oder 3, dadurch gekennzeichnet, daß man die Polymerisationsregler in Mengen von 0,1 bis 15 Gew.-%, bezogen auf die Monomeren einsetzt.

5. Verfahren nach einem der Ansprüche 2 bis 4, dadurch gekennzeichnet, daß man als Polymerisationsregler Mercaptoverbindungen, Dialkylsulfide, Dialkyldisulfide und/oder Diarylsulfide einsetzt.

6. Verfahren nach einem der Ansprüche 2 bis 5, dadurch gekennzeichnet, daß man die Polymerisationsregler während der Polymerisation der Monomeren kontinuierlich oder portionsweise zugibt.

7. Verwendung von Polymerisaten, die mindestens 10 Gew.-% eines Alkyl-1-vinylimidazols einpolymerisiert enthalten, als Zusatz zu Waschmitteln zur Inhibierung der Farbstoffübertragung während des Waschvorgangs.

8. Verwendung nach Anspruch 7, dadurch gekennzeichnet, daß man die nach den Ansprüchen 2 bis 6 erhältlichen Polymerisate einsetzt.

9. Verwendung nach Anspruch 7 oder 8, dadurch gekennzeichnet, daß man die Polymerisate in Flüssigwaschmitteln einsetzt.

## Claims

1. A polymer of alkyl-1-vinylimidazoles, which is obtainable by free-radical polymerization of monomer mixtures comprising
(a) 10-100% by weight of at least one alkyl-1-vinylimidazole,
(b) 0-90% by weight of 1-vinylpyrrolidone, 1-vinylcaprolactam, 1-vinyltriazole, 1-vinylimidazole, 1-vinyloxazolidinone or mixtures thereof,
(c) 0-30% by weight of other monoethylenically unsaturated monomers and
(d) 0-10% by weight of a monomer containing at least 2 monoethylenic double bonds
in water, at least one C₁-C₄-alcohol or mixtures thereof, in the presence of polymerization regulators.

2. A process for preparing polymers of alkyl-1-vinylimidazoles by free-radical polymerization of monomer mixtures comprising
(a) 10-100% by weight of at least one alkyl-1-vinylimidazole,
(b) 0-90% by weight of 1-vinylpyrrolidone, 1-vinylcaprolactam, 1-vinyltriazole, 1-vinylimidazole, 1-vinyloxazolidinone or mixtures thereof,
(c) 0-30% by weight of other monoethylenically unsaturated monomers and
(d) 0-10% by weight of a monomer containing at least 2 monoethylenic double bonds
in water, at least one C₁-C₄-alcohol or mixtures thereof, wherein the polymerization is carried out in the presence of polymerization regulators.

3. A process as claimed in claim 2, wherein the polymerization regulators contain sulfur in bound form.

4. A process as claimed in claim 2 or 3, wherein the polymerization regulators are employed in amounts of from 0.1 to 15% by weight, based on the monomers.

5. A process as claimed in any of claims 2 to 4, wherein mercapto compounds, dialkyl sulfides, dialkyl disulfides and/or diaryl sulfides are employed as polymerization regulators.

6. A process as claimed in any of claims 2 to 5, wherein the polymerization regulators are added continuously or in portions during the polymerization of the monomers.

7. The use of polymers which comprise at least 10% by weight of an alkyl-1-vinylimidazole as copolymerized units as additive to detergents to inhibit transfer of dyes during the washing process.

8. The use as claimed in claim 7, wherein the polymers obtainable as claimed in claims 2 to 6 are employed.

9. The use as claimed in claim 7 or 8, wherein the polymers are employed in liquid detergents.

## Revendications

1. Polymères de 1-vinylimidazoles alkylés, caractérisés en ce qu'on peut les obtenir par polymérisation radicalaire de mélanges de monomères constitués de
a) 10 à 100 % en poids d'au moins un 1-vinylimidazole alkylé,
b) 0 à 90 % en poids de 1-vinylpyrrolidone, de 1-vinylcaprolactame, de 1-vinyltriazole, de 1-vinylimidazole, de 1-vinyloxazolidinone ou leurs mélanges,
c) 0 à 30 % en poids d'autres monomères à insaturation monoéthylénique et
d) 0 à 10 % en poids de monomères contenant au moins 2 doubles liaisons à insaturation monoéthylénique
dans l'eau, dans au moins un alcool en C₁-C₄, ou dans leurs mélanges, en présence de régulateurs de polymérisation.

2. Procédé de préparation de polymères de 1-vinylimidazoles alkylés par polymérisation radicalaire de mélanges de monomères constitués de
a) 10 à 100 % en poids d'au moins un 1-vinylimidazole alkylé,
b) 0 à 90 % en poids de 1-vinylpyrrolidone, de 1-vinylcaprolactame, de 1-vinyltriazole, de 1-vinylimidazole, de 1-vinyloxazolidinone ou leurs mélanges,
c) 0 à 30 % en poids d'autres monomères à insaturation monoéthylénique et
d) 0 à 10 % en poids de monomères contenant au moins 2 doubles liaisons à insaturation monoéthylénique
dans l'eau, dans au moins un alcool en C₁-C₄, ou dans leurs mélanges, caractérisé en ce que l'on effectue la polymérisation en présence de régulateurs de polymérisation.

3. Procédé selon la revendication 2, caractérisé en ce que les régulateurs de polymérisation contiennent du soufre sous forme liée.

4. Procédé selon la revendication 2 ou 3, caractérisé en ce que l'on utilise les régulateurs de polymérisation en quantités de 0,1 à 15 % en poids, par rapport aux monomères.

5. Procédé selon l'une quelconque des revendications 2 à 4, caractérisé en ce que l'on utilise des composés mercapto, des sulfures de dialkyle, des disulfures de dialkyle et/ou des sulfures de diaryle, en tant que régulateurs de polymérisation.

6. Procédé selon l'une quelconque des revendications 2 à 5, caractérisé en ce que l'on ajoute les régulateurs de polymérisation de façon continue ou par fractions, pendant la polymérisation des monomères.

7. Utilisation de polymères contenant en liaison polymère au moins 10 % en poids d'un 1-vinylimidazole alkylé, en tant qu'additif pour produits de lavage à effet inhibiteur pour le transfert de colorant pendant le processus de lavage.

8. Utilisation selon la revendication 7, caractérisée en ce que l'on utilise les polymères obtenus selon les revendications 2 à 6.

9. Utilisation selon la revendication 7 ou 8, caractérisée en ce que l'on utilise les polymères dans des produits de lavage liquides.
